# EUROPEAN PATENT SPECIFICATION

(11) **EP 3 433 990 B1**
(45) Date of publication and mention of the grant of the patent: **03.07.2024**
(21) Application number: 17707140.4
(22) Date of filing: 08.02.2017
(51) Int. Cl.: H04L 9/40, G06F 9/455, G06F 21/57, H04L 67/10, G06F 8/60, H04L 67/1004, H04L 67/131

(54) **PROTECTING DYNAMIC AND SHORT-LIVED VIRTUAL MACHINE INSTANCES IN CLOUD ENVIRONMENTS**
SCHUTZ VON DYNAMISCHEN UND KURZLEBIGEN INSTANZEN VIRTUELLER MASCHINEN IN CLOUD-UMGEBUNGEN
PROTECTION D'INSTANCES DE MACHINE VIRTUELLE DYNAMIQUES ET À COURTE DURÉE DE VIE DANS DES ENVIRONNEMENTS INFONUAGIQUES

(30) Priority: 22.03.2016 IN 201641010042; 05.05.2016 US 201615147217
(43) Date of publication of application: 30.01.2019
(73) Proprietor: CA, Inc., San Jose, CA 95131 (US)
(72) Inventor: MOHANTY, Shubhabrata, Magarpatta City Pune 411013 (IN); IYER, Sudha, Sunnyvale California 94087 (US)
(74) Representative: Dilg, Haeusler, Schindelmann Patentanwaltsgesellschaft mbH
(86) International application number: PCT/US2017/017004
(87) International publication number: WO 2017/165005

(56) References cited:
- WO-A1-2016/003566
- US-A1- 2013 133 068
- US-A1- 2014 096 134
- US-A1- 2015 304 344

## Description

### CROSS REFERENCE TO RELATED APPLICATIONS

This application claims benefit of Indian Provisional Patent Application Serial No. 201641010042, filed March 22, 2016, and U.S. Patent Application No. 15/147,217, filed May 5, 2016, both of which are assigned to the assignee hereof.

### BACKGROUND

### Field

Embodiments presented herein generally relate to computer security systems, and more specifically, to automatically deploying computer security policies on temporary virtual machine instances in a cloud environment.

### Description of the Related Art

In cloud computing platforms, the workload lifecycle may change rapidly. Workloads may be configured for specific operations and may be active for a limited duration, depending on the context of the workload. A workload may be deployed on a cloud computing platform including a number of persistent virtual machines (VMs). The workload may use additional, temporary resources, as traffic or processing demands for the workload increase. For example, additional virtual machines (or cloud resources) may be allocated to accelerate processes such as analytical data processing (e.g., log scanning, simulations, and so on), testing routines, and web crawling processes to generate an index of sites on the internet. Virtual machines may be allocated dynamically in response to changes in workloads executing in the cloud computing platform, which may allow the cloud computing platform to augment the processing capabilities assigned to a workload with additional capabilities on an as-needed basis.

In some cases, the temporary virtual machine instances may be allocated based on real-time changes in supply (excess resources, or virtual machines, on a cloud computing platform) and demand, as well as a bid price, or a price that a workload owner is willing to pay for additional resources at a given time. When a spot price, or the price of additional virtual machine instances at a particular point in time, is less than a workload owner's bid price, a cloud system may allocate additional temporary virtual machine instances to the workload. If the spot price rises above the workload owner's bid price, the cloud system may deallocate temporary virtual machine instances from the workload (e.g., after a set amount of time, which may allow the workload to discontinue operations on the temporary virtual machine instance before the cloud system deallocates the temporary virtual machine instance from the workload).

In a cloud environment, temporary virtual machines may be allocated in public groups of instances that can be allocated to any user. A cloud service can dynamically allocate temporary virtual machine instances in a public group to a workload when demand spikes and deallocate temporary virtual machine instances as demand on the workload decreases. Temporary virtual machines may also be allocated from an available group of instances into virtual private clouds, or dedicated virtual networks. Within these virtual private clouds, temporary virtual machines may be allocated to subnets that limit network access to other virtual machines in the network or subnets that permit the virtual machines in the subnet to access data on external networks.

When a cloud system allocates a temporary virtual machine instance to a workload, the temporary virtual machine instance generally comes on line and begins interacting with other virtual machine instances that are assigned to process the workload. In such a case, the temporary virtual machine instance may receive access to hundreds or thousands of other virtual machines. Additionally, temporary virtual machines may not include security systems, which may expose such virtual machines to attacks that can ultimately attack other workloads on peer virtual machines.

US 2014/0096134 A1 relates to a system and method for enforcement of security controls on virtual machines throughout lifecycle state changes. In some implementations a lifecycle manager may include a virtual machine integrity module which may monitor and validate whether virtual machine data is compliant with integrity policies if the integrity of guest virtual machineis noncompliant, virtual machine integrity module may issue alert to notify the appropriate entities. Integrity of a guest virtual machine may be based, for example, on a signature of a sensitive file, whether unauthorized applications or data are present in the guest virtual machine, the state of the guest virtual machine, and so forth.

WO 2016/003566 A1 relates to a secure integration of hybrid clouds with enterprise networks.

US 2013/0133068 A1 relates to a method, apparatus and system for preventing DDOS attacks in cloud system.

US 2015/0304344 A1 relates to a system and method for controlling virtual network including security function.

### Summary

The claimed invention is defined by the subject matter of independent claims 1, 4, and 7.

One aspect of the present disclosure includes a method for protecting temporary virtual machine instances from security risks. The method generally includes monitoring a cloud platform for the assignment of a temporary virtual machine instance to a workload. A security system obtains information about a configuration of the temporary virtual machine instance and applications deployed on the temporary virtual machine instance. Based on the configuration of the temporary virtual machine instance and applications deployed on the temporary virtual machine instance, the security system generates a security policy to apply to the temporary virtual machine instance.

Another aspect provides a computer-readable storage medium having instructions, which, when executed on a processor, performs an operation for protecting temporary virtual machine instances from security risks. The operation generally includes monitoring a cloud platform for the assignment of a temporary virtual machine instance to a workload. A security system obtains information about a configuration of the temporary virtual machine instance and applications deployed on the temporary virtual machine instance. Based on the configuration of the temporary virtual machine instance and applications deployed on the temporary virtual machine instance, the security system generates a security policy to apply to the temporary virtual machine instance.

Still another aspect of the claimed invention includes a processor and a memory storing a program, which, when executed on the processor, performs an operation for protecting temporary virtual machine instances from security risks. The operation generally includes monitoring a cloud platform for the assignment of a temporary virtual machine instance to a workload. A security system obtains information about a configuration of the temporary virtual machine instance and applications deployed on the temporary virtual machine instance. Based on the configuration of the temporary virtual machine instance and applications deployed on the temporary virtual machine instance, the security system generates a security policy to apply to the temporary virtual machine instance.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only exemplary embodiments and are therefore not to be considered limiting of its scope, may admit to other equally effective embodiments.
Figure 1 illustrates an example of a networked computing environment, according to one embodiment.
Figure 2 illustrates an example virtual machine (VM) instance analyzer, according to one embodiment.
Figure 3 illustrates example operations for monitoring a cloud environment for temporary virtual machines and generating a security policy to be applied to a temporary virtual machine, according to one embodiment.
Figure 4 illustrates example operations for remediating security risks on temporary virtual machines based on reputation data associated with applications deployed on a temporary virtual machine, according to one embodiment.
Figure 5 illustrates example operations for remediating security risks on temporary virtual machines based on detecting anomalous network activity, according to one embodiment.
Figure 6 illustrates an example computing system for determining security policies to apply to temporary virtual machines in a cloud computing environment, according to one embodiment.

To facilitate understanding, identical reference numerals have been used, where possible, to designate identical elements that are common to the figures. It is contemplated that elements and features of one embodiment may be beneficially incorporated in other embodiments without further recitation.

### DETAILED DESCRIPTION

Aspects and embodiments presented herein provide techniques for generating security policies for temporary virtual machine instances in a cloud computing platform. A security system can use information about the temporary virtual machine instance and applications deployed on the temporary virtual machine instance to generate a recommended security policy to be applied to the temporary virtual machine instance. The security system can automatically apply a recommended security policy when a temporary virtual machine instance is added to a workload or prompt a system administrator to review and modify a recommended security policy before applying the security policy to the temporary virtual machine instance. In some cases, the security system may additionally examine the reputation status for each application deployed on a temporary virtual machine instance and launch remediation processes on the temporary virtual machine instance (and other virtual machine instances working on the same workload) to remediate security risks to a cloud computing environment from rogue programs executing on a virtual machine instance.

By generating a recommended security policy for temporary virtual machine instances, a security system can enforce and implement a security policy as temporary virtual machines are added to a workload. These security policies may protect other virtual machines in the cloud computing platform from security threats that may arise from introducing an unprotected temporary virtual machine instance into a computing environment.

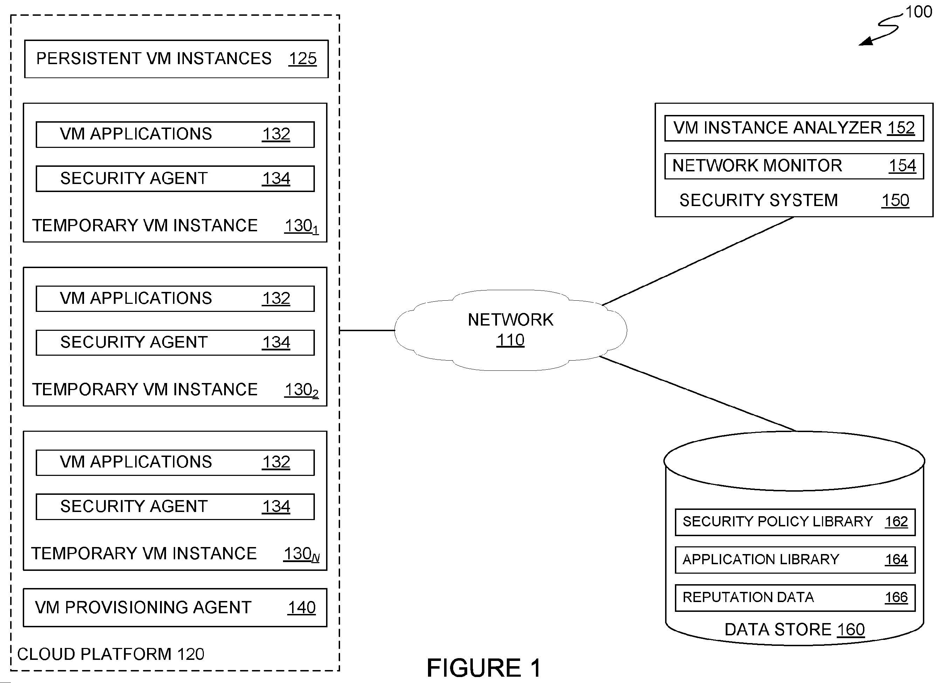

Figure 1 illustrates an example computing environment 100, according to one embodiment. As shown, the computing environment generally includes a cloud platform 120, security system 150, and a data store 160 connected to a network 110.

Cloud platform 120 generally provides one or more persistent virtual machine (VM) instances 125 and a plurality of temporary VM instances 130 that can be provisioned to various workloads that execute on cloud platform 120. A workload, such as an analytics processing workload, software testing workload, web crawling workload, simulation workloads, or any other computationally intensive job that can be executed on cloud platform 120 may be executed on a base set of persistent VM instances 125, which may be dedicated to a particular workload. One or more temporary VM instances 130 may be allocated to a workload based on the availability of temporary VM instances 130 in cloud platform 120 and a price associated with adding a temporary VM instance 130 to a workload.

As illustrated, each temporary VM instance 130 generally includes one or more VM applications 132 and a security agent 134. The VM applications deployed on a temporary VM instance 130 may be user-defined and may include, for example, database systems (*e.g.,* SQL-based (relational) database systems or lightweight, non-relational database systems), data processing software, customized customer-specific programs (*e.g.,* proprietary genetic or financial modeling applications), and so on.

For a given workload, a system administrator can define the number of persistent virtual machines that are allocated to process the workload and a price the system administrator is willing to pay to augment the persistent virtual machines with additional, temporary computing resources. When the price of temporary virtual machine instances available from cloud platform 120 is at or less than the price a system administrator is willing to pay for additional computing resources, cloud platform 120, through VM provisioning agent 140, can allocate a number of temporary virtual machine instances 130 to a given workload. Conversely, when the price of a temporary virtual machine instance 130 exceeds the price the system administrator is willing to pay, the one or more temporary virtual machine instances 130 may be removed from the workload and placed in an availability pool for assignment to other workloads.

Temporary virtual machine instances 130 generally include metadata that provides information to security system 150 about the temporary virtual machine instance. The information generally includes an image identifier, a workload group identifier, private cloud identifier, user-defined tags, and characteristics of the pool of temporary virtual machine instances that particular temporary virtual machine instance belongs to. Temporary virtual machine instances spawned from a particular source virtual machine generally have the same characteristics (and correspondingly, the same or similar metadata properties) as the source virtual machine.

A temporary virtual machine instance 130 may be spawned from a configuration used for one or more persistent virtual machine instances 125 used for a given workload. In such a case, if the configuration used for a persistent virtual machine instance 125 includes a security agent 134, the temporary virtual machine instance 130 can notify a security system 150 that security agent 134 is already present on the temporary virtual machine instance. While temporary virtual machine instance 130 may additionally inherit the security policies applied to the persistent virtual machine instance 125 from which temporary virtual machine instance 130 was spawned, temporary virtual machine instance 130 may inform a security system 150 of the configuration of the temporary virtual machine instance 130 to obtain a security policy to be applied to the temporary virtual machine instance.

If a temporary virtual machine instance 130 is spawned from a default image (e.g., a base Linux image without any applications 132 or a security agent 134 installed on the image), a system administrator may install the applications needed for the temporary virtual machine instance 130 to contribute resources to the workload. For example, when a temporary virtual machine instance 130 is spawned, a system administrator can use one or more software provisioning tools, which may be hosted on cloud platform 120 (e.g., as part of VM provisioning agent 140), to automatically deploy a set of applications on the temporary virtual machine instance.

In some cases, a temporary virtual machine instance 130 may be spawned with a security agent 134 preinstalled on the temporary virtual machine instance. When temporary virtual machine instance 130 is spawned and added to a workload, security agent 134 registers the existence of the temporary virtual machine instance 130 with security system 150. When temporary virtual machine instance 130 registers with security system 150, temporary virtual machine instance 130 generally provides information about the temporary virtual machine instance 130 and the applications 132 deployed on the temporary virtual machine instance to the security system 150. In response, as discussed in further detail below, the temporary virtual machine instance 130 receives a security policy to protect the temporary virtual machine instance 130 and other virtual machine instances in the same network from a variety of security risks (*e.g.,* unauthorized system access from outside users, data corruption caused by various types of malware, and so on). Additionally, if a temporary virtual machine instance 130 includes software that is a security risk, informing security engine 150 of the applications that are deployed on the temporary virtual machine instances 130 allows security system 150 to identify remediation actions that should be performed on the temporary virtual machine instance 130 and other peer virtual machine instances to remedy security risks that exist in cloud platform 120.

VM provisioning agent 140 is generally configured to allocate and deallocate temporary virtual machine instances from a workload. VM provisioning agent 140 may provide an interface to allow a system administrator to specify, for example, a maximum number of temporary virtual machines that can be added to the workload and a price that the system administrator is willing to pay for each temporary virtual machine 130 that VM provisioning agent 140 adds to a workload. In some cases, VM provisioning agent 140 may additionally allow a system administrator to specify an identifier for the group of persistent and temporary virtual machines, as well as whether the group of virtual machines is exposed to the public (*e.g.,* commingled with other groups of virtual machines in a public subnet) or if the group of virtual machines is isolated in a private subnet.

VM provisioning agent 140 generally monitors the demand for temporary virtual machine instances 130 by workloads hosted on cloud platform 120. Based on the monitored demand for computing resources in cloud system 120, VM provisioning agent 140 can adjust the price for a temporary virtual machine instance 130. As the demand in cloud system 120 increases, VM provisioning system 140 can increase the price of a temporary virtual machine instance 130. As VM provisioning system 140 increases the price of temporary virtual machine instances 130, VM provisioning agent 140 can deallocate temporary virtual machine instances 130 from workloads with acceptable VM pricing below the current price of a temporary virtual machine instance 130. The temporary virtual machine instances 130 can be reallocated to workloads with acceptable VM pricing that is higher than the current price for a temporary virtual machine instance 130. Likewise, VM provisioning agent 140 can lower the price of temporary virtual machine instances 130 as demand for temporary virtual machine instances 130 in cloud system 120 decreases.

Security system 150 generally monitors the allocation of temporary virtual machine instances 130 in cloud platform 120 to determine a security policy to be applied to newly spawned temporary virtual machine instances 130. Security system 150 can use information about the configuration and software deployed on a temporary virtual machine to generate a recommended security policy to be applied to the temporary virtual machine instance 130. In some cases, security system 150 may additionally use feedback from a system administrator (*e.g.,* when a system administrator overrides an active security policy or modifies a recommended security policy before applying the security policy to a temporary virtual machine instance 130) to determine future recommended security policies for virtual machines in cloud platform 120.

As illustrated, security system 150 includes a VM instance analyzer 152 and a network monitor 154. VM instance analyzer 152 is generally configured to obtain data from a temporary virtual machine instance 130 and generate a security policy for the temporary virtual machine instance 130 based on the characteristics of the temporary virtual machine instance 130 and the applications 134 deployed on a temporary virtual machine instance 130.

In some cases, a VM instance analyzer 152 can discover that cloud platform 120 has spawned a temporary virtual machine instance 130 when a security agent 134 installed on temporary virtual machine instance 130 enrolls with security system 150. In another case, VM instance analyzer 152 can monitor cloud platform 120 for newly spawned temporary virtual machine instances 130. For example, VM instance analyzer 152 can monitor for the addition of new temporary virtual machine instances to one or more networks (or subnets) within cloud platform 120. Upon discovering that a temporary virtual machine instance 130 has been spawned in cloud platform 120, VM instance analyzer 152 generally queries the temporary virtual machine instance 130 for metadata from the temporary virtual machine instance 130. VM instance analyzer 152 may obtain metadata from cloud platform 120 via application programming interfaces (APIs) provided by cloud platform 120 that allow VM instance analyzer 152 (and other systems) to obtain information about virtual machine instances hosted on cloud platform 120. As discussed above, the information that VM instance analyzer 152 obtains from cloud platform 120 may include a virtual machine identifier, a virtual machine group identifier, network (or subnet) identifiers, user-defined tags, and so on.

Additionally, VM instance analyzer 152 can connect to a software provisioning tool in cloud platform 120 to obtain information about the software packages deployed on a temporary virtual machine instance 130. The software provisioning tools in cloud platform 120 may provide information identifying a software package, the version of the software package, and so on. In some cases, VM instance analyzer 152 can use the information about the software packages deployed on a temporary virtual machine instance 130 to query a reputation service for information about the applications deployed on temporary virtual machine instance 130. Applications that are well known and trusted (e.g., commonly-used web stack applications, such as Apache, Tomcat, PHP, database applications, such as MySQL, and so on) may be associated with a recommended security policy that generally allows for network communications to/from the application. If VM instance analyzer 152 detects that an application deployed on a temporary virtual machine instance 130 is known to be malicious or otherwise has a poor reputation, VM instance analyzer 152 can generate a security policy for the temporary virtual machine instance 130 to remove the application from the temporary virtual machine instance. VM instance analyzer 152 can additionally generate a security policy to initiate remediation procedures on the temporary virtual machine instance 130 and, in some cases, peer virtual machine instances in cloud platform 120.

Based on the metadata about the temporary virtual machine instance 130 and the applications 132 deployed on the temporary virtual machine instance 130, VM instance analyzer 152 can monitor cloud platform 120 for peer virtual machine instances (*e.g.,* peer persistent virtual machine instances 125 and/or peer temporary virtual machine instances 130). If VM instance analyzer 152 finds a peer virtual machine instance with a similar configuration and set of deployed applications 152, VM instance analyzer 152 can query a security policy database (*e.g.,* security policy library 162 in data store 160) for a security policy previously applied to the peer virtual machine instance. In some cases, if VM instance analyzer 152 determines that the recommended security policy has a high likelihood of sufficiently protecting the temporary virtual machine instance and peer virtual machine instances in cloud platform 120, the VM instance analyzer 152 may enforce the security policy without requesting approval and/or modification from a system administrator.

If VM instance analyzer 152 cannot find a peer virtual machine instance with the same (or sufficiently similar) configuration and deployed applications 132 on the temporary virtual machine instance 130, VM instance analyzer 152 can generate a recommended security policy for the temporary virtual machine instance 130. In some cases, VM instance analyzer may generate a recommended security policy based on a hierarchical analysis of the configuration of the temporary virtual machine 130 and the applications 132 deployed on the temporary virtual machine instance 130. For example, a VM instance analyzer 152 may begin generating a security policy for the temporary virtual machine instance by analyzing the group of virtual machines that the temporary virtual machine instance 130 was added to. If a temporary virtual machine instances 130 is added to a public subnet, VM instance analyzer may generate a firewall policy that isolates the temporary virtual machine instance 130 from other temporary virtual machine instances in cloud platform 120. If, however, temporary virtual machine instance 130 is added to a private network (or subnet in cloud platform 120), VM instance analyzer can generate a security policy that blocks access to the temporary virtual machine instance from devices and virtual machines outside of the private network (or subnet).

After VM instance analyzer 152 analyzes the characteristics of the temporary virtual machine instance 130, VM instance analyzer 152 proceeds to analyze the applications 132 to generate a recommended security policy for the temporary virtual machine instance 130. For example, VM instance analyzer 152 can use security policies and settings applied for a specific application on other virtual machine instances (persistent virtual machine instances 125 and/or other temporary virtual machine instances 130) to recommend a security policy to be applied to the temporary virtual machine instance 130 for the application

In some cases, VM instance analyzer 152 can use information about the functionality of the applications 132 to determine a recommended security policy for the temporary virtual machine instance 130. For example, if Apache HTTP server, which is generally used to serve requests for web pages, is deployed on a temporary virtual machine instance, VM instance analyzer 152 can determine that port 80 should be open on the temporary virtual machine instance to allow the deployed HTTP server to serve web pages to requesting devices. In another example, for a proprietary application that is not included in an application database, such as a financial analysis tool available only within a specific organization, VM instance analyzer 152 can initially recommend a security policy that blocks the application from sending and/or receiving data using a network connection.

In some cases, VM instance analyzer may additionally obtain the reputation of the deployed applications 132 on temporary virtual machine instance 130 to determine whether or not applications are allowed to execute on the temporary virtual machine instance. For each application 132 deployed on temporary virtual machine instance 130, VM instance analyzer can query a reputation service (or reputation data repository, such as reputation data 166 in data store 160) to obtain reputation data for an application. If reputation data for the application indicates that the application is trusted or otherwise has a good reputation (*i.e.,* does not include a malicious payload), VM instance analyzer 152 need not take any further action with respect to the application. If, however, reputation data for the application indicates that the application is untrusted or otherwise has a bad reputation (*e.g.,* includes a malicious payload, participates in a botnet, or is otherwise untrusted), VM instance analyzer 152 can determine one or more remediation actions to perform on the temporary virtual machine instance to remedy any threats posed to the temporary virtual machine and/or peer virtual machine instances from the application. In some cases, the remediation actions may include removing the application 132 from the temporary virtual machine instance 130. Remediation actions may additionally include removing related applications, blocking traffic to/from one or more designated network locations (*e.g.,* known botnet command and control servers), and so on.

Network monitor 154 is generally configured to monitor network activity at cloud platform 120 for anomalies in network traffic sent from or received at a temporary virtual machine instance 130. Network monitor 154 may, for example, receive reports about network activity from a security agent 134 at a temporary virtual machine instance 130 or may monitor network activity as data is transmitted to and from temporary virtual machine instances 130. Based on the detected network activity, network monitor can detect whether a temporary virtual machine instance 130 is generating or receiving traffic due to malicious processes executing on the temporary virtual machine instance. In some cases, network monitor 154 may detect anomalous traffic at a temporary virtual machine instance 130 by detecting, based on network activity logs received from other temporary virtual machine instances in cloud platform 120, traffic that is not present or is not commonly seen network activity in the network activity logs from other temporary virtual machine instances.

Upon detecting anomalies in network activity at a temporary virtual machine instance, network monitor 154 can identify similar behavior at other virtual machine instances in cloud platform 120. In response, network monitor can determine that the temporary virtual machine instance 130 has been infected with a malicious payload by one or more peer virtual machine instances or has infected other virtual machine instances with a malicious payload. Network monitor 154 can also determine that source of the abnormal activity and generate an alert to notify a system administrator of the abnormal activity.

Network monitor 154 can use information about abnormal activity in cloud platform 120 to determine a remediation action to apply to one or more virtual machine instances on cloud platform 120. For example, network monitor 154 can quarantine a temporary virtual machine instance 130 or terminate a temporary virtual machine instance 130 and spawn a replacement instance. The replacement instance may be spawned from a clean virtual machine image or as a clone of a virtual machine instance that has not been compromised by malware or anomalous activity.

Data store 160, as illustrated, generally includes a security policy library 162, application library 164, and reputation data 166. Security policy library 162 generally includes information about security policies previously applied to other temporary virtual machine instances. Security policy library 162 may be structured as a relational database that associates a particular virtual machine configuration and set of deployed applications to a security policy implemented for that configuration and set of deployed applications. As discussed above, security system 150 can use the security policies applied to other virtual machine instances to derive a security policy for a temporary virtual machine instance 130 that is newly created and allocated to a particular workload. For temporary virtual machine instance 130 that are new to security system 150, the security policy applied to the temporary virtual machine instance 130 can be saved to security policy library 162 for future use in determining security policies to be applied to new temporary virtual machine instances.

Application library 164 generally stores information about commonly deployed applications that security system 150 can use to determine a security policy to be applied to a temporary virtual machine instance 130. For example, application library 164 can store an association of a family of applications (*e.g.,* different versions of the same application) with a known use for the application and a security policy that allows the application to work as intended. That is, for a web server application, application library 164 includes information indicating that port 80 should be opened for the application, while for a relational database application (*e.g.,* a SQL-based database server), application library 164 includes information indicating that port 156 should be opened for the application.

Reputation data 166 generally stores reputation information for a variety of applications, network locations, and so on. Reputation data 166 may be updated periodically based on user feedback (*e.g.,* whether a user allows or blocks an application from executing), telemetry monitoring, and offline review of an application or network location. In some cases, reputation data 166 may associate a fingerprint of an application (*e.g.,* an MD5 hash of an executable file) or an internet protocol (IP) address of a network location with a reputation status. The reputation status may indicate that the application or network location is "trusted" or good (*e.g.,* does not include or serve a malicious payload), unknown, or "untrusted" or bad (*e.g.,* includes or serves a malicious payload, is part of a botnet, and so on). In some cases, reputation data 166 may include information about remediation procedures for applications with an "untrusted" or bad reputation, which security system 150 may use to remediate security risks on a temporary virtual machine instance 130 (and peer virtual machines in cloud platform 120) posed by malicious applications deployed on a temporary virtual machine instance 130.

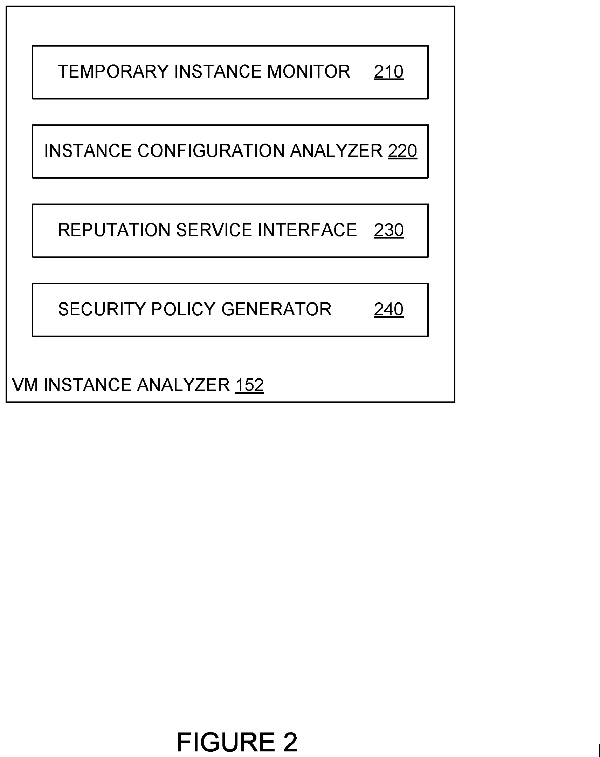

Figure 2 illustrates an example VM instance analyzer 152, according to an embodiment. As illustrated, VM instance analyzer 152 generally includes a temporary instance monitor 210, instance configuration analyzer 220, reputation service interface 230, and security policy generator 240.

Temporary instance monitor 210 is generally configured to monitor cloud platform 120 for newly allocated temporary virtual machine instances 130. In some cases, when a security agent 134 is already deployed on a temporary virtual machine instance 130, temporary instance monitor 210 may detect that VM provisioning agent 140 has spawned the temporary virtual machine instance 130 when security agent 134 transmits a message to register with VM instance analyzer 152. For new temporary virtual machine instances (*e.g.,* instances that do not include a security agent 134), temporary instance monitor 210 can monitor the number of temporary virtual machine instances present on cloud platform 120 to determine that VM provisioning agent 140 has spawned a new temporary virtual machine instance 130.

Upon detecting that VM provisioning agent 140 has spawned a new temporary virtual machine instance 130 (*e.g.,* via registration of a temporary virtual machine instance 130 through security agent 134 or discovery of a temporary virtual machine instance 130 by temporary instance monitor 210), instance configuration analyzer 220 can obtain configuration information for the temporary virtual machine instance 130. For example, instance configuration analyzer 220 can use APIs provided by cloud platform 120 to obtain configuration information for the newly-allocated temporary virtual machine instance 130. The configuration information may include information identifying an image or virtual machine that the temporary virtual machine instance 130 was spawned from, a group of virtual machine instances or network that the temporary virtual machine instance 130 belongs to, and so on.

Additionally, instance configuration analyzer 220 can obtain information about the applications 132 deployed on a temporary virtual machine instance for use in determining a security policy to apply to temporary virtual machine instance 130 and/or remediation actions to perform on temporary virtual machine instance 130. In some cases, instance configuration analyzer 220 can obtain information about the applications 132 using software deployment tools available through cloud platform 120, which may provide a list of applications that a system administrator has chosen to deploy on a temporary virtual machine instance. The information provided by the software deployment tools may include, for example, data identifying an application, such as a name or a fingerprint that uniquely identifies the application (*e.g.,* an MD5 hash of the application executable), version information for the application, and so on.

Reputation service interface 230 is generally configured to obtain reputation data for the applications 132 deployed on temporary virtual machine instance 130 from a reputation data source. Reputation service interface 230 may provide an interface to an external reputation service hosted in the cloud or a local reputation service. To obtain reputation data for an application, reputation service interface 230 transmits, to a reputation service, data identifying an application (*e.g.*, the data obtained by instance configuration analyzer 220 from software deployment tools on cloud platform 120. In response, reputation service interface 230 generally receives data indicating that an application is trusted or has a good reputation (*e.g.,* does not include a malicious payload), has an unknown reputation, or is untrusted (*e.g.,* includes a malicious payload, communicates with known botnet command-and-control servers, and so on).

Security policy generator 240 generally uses the data about the characteristics of a temporary virtual machine instance 130 and the applications deployed on the temporary virtual machine instance to generate a recommended security policy to be applied to the temporary virtual machine instance. As discussed above, security policy generator 240 can use information about similar virtual machine instances as a basis for generating a recommended security policy for the temporary virtual machine instance 130. If a new configuration is used in allocating a temporary virtual machine instance 130 to a workload, security policy generator 240 can use the characteristics of the temporary virtual machine instance to determine, for example, a firewall policy to be implemented for the instance. For example, security policy generator 240 can generate a firewall policy isolating a temporary virtual machine instance 130 from other virtual machine instances in a public group of virtual machines. If a virtual machine instance 130 is added to a private network (or group of virtual machines), security policy generator 240 can generate a firewall policy isolating the temporary virtual machine instance 130 from devices outside of the private network.

After generating a base security policy based on the characteristics of the temporary virtual machine instance 130, security policy generator 240 can modify the security policy based on the functionality of the applications deployed on the temporary virtual machine instance. Generally, security policy generator 240 can modify a security policy applied to a temporary virtual machine instance 130 to allow the temporary virtual machine instance to provide the services enabled by the applications deployed on the temporary virtual machine instance. For example, if an HTTP server is deployed on the temporary virtual machine instance 130, security policy generator can expose port 80 on the temporary virtual machine instance 130 to allow the temporary virtual machine instance to serve requests for web pages to requesting devices outside of cloud platform 120.

Security policy generator 240 additionally can use reputation data associated with the applications deployed on a temporary virtual machine instance 130 to determine whether to initiate remediation actions on the temporary virtual machine instance. Security policy generator 240 need not initiate remediation actions for applications that have a trusted or good reputation (*e.g.,* applications that are well known and commonly used, such as commercial or open source HTTP servers, database servers, and so on) or applications that are unknown. However, if an application is untrusted or otherwise has a poor reputation, security policy generator 240 can initiate remediation actions, for example, by transmitting a message to security agent 134 on the temporary virtual machine instance 130. The message may indicate the application that is the target of the remediation actions and may additionally indicate, to security agent 134, the remediation actions that should be taken to eliminate security risks from the temporary virtual machine instance 130 (and peer virtual machine instances).

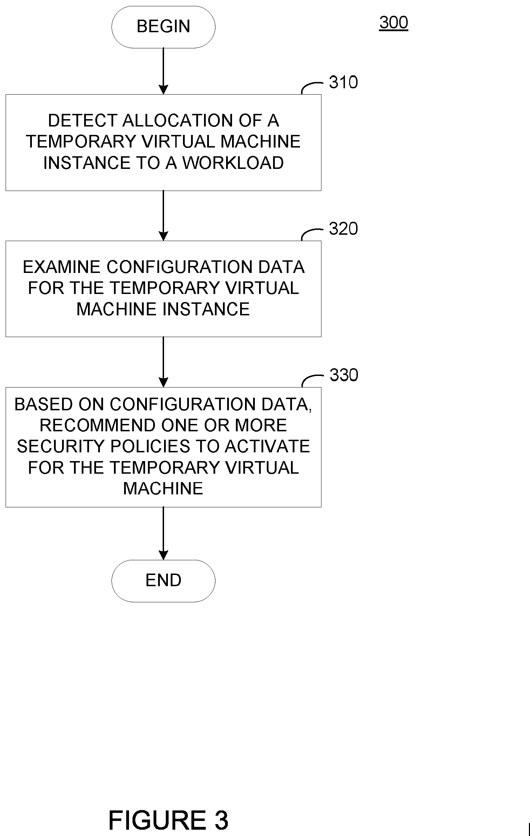

Figure 3 illustrates example operations 300 that may be performed to generate a security policy to be applied to a temporary virtual machine, according to one embodiment. As illustrated, operations 300 begin at step 310, where a security system detects the allocation of a temporary virtual machine instance to a workload. A security system can detect the allocation of a temporary virtual machine instance to a workload, for example, when a temporary virtual machine instance registers with the security system.

At step 320, the security system examines the configuration data for the temporary virtual machine instance. In examining the configuration data for the temporary virtual machine instance, the security system generally obtains metadata associated with the temporary virtual machine instance from the cloud platform using one or more APIs provided by the cloud platform that expose the characteristics of the virtual machine instance. The security system additionally obtains a list of the applications deployed on the temporary virtual machine instance through a software deployment tool provided by the cloud platform.

At step 330, the security system recommends one or more security policies to activate for the temporary virtual machine based on the configuration data. The security policies may be generated based on a previously-applied security policy for a virtual machine instance with similar characteristics and a similar set of deployed applications. If the security system has not generated a security policy for a virtual machine instance with similar characteristics and a similar set of deployed applications, the security system can generate a base security policy based on the characteristics of the temporary virtual machine instance. As discussed above, the security system can generate a security policy to isolate the allocated temporary virtual machine instance from other temporary virtual machine instances if the allocated temporary virtual machine instance belongs to a public group of instances. If the temporary virtual machine instance is added to a private network or group of virtual machines, the security system can generate a security policy to isolate the temporary virtual machine from devices outside of the private network.

Subsequently, the security system can use information about the applications deployed on the temporary virtual machine instance to modify the base security policy generated from the characteristics of the temporary virtual machine instance. The security system can modify a base security policy, for example, to open certain ports on the temporary virtual machine instance to allow applications deployed on the temporary virtual machine instance to provide the services that are enabled by the applications (*e.g.,* opening port 80 for an HTTP server).

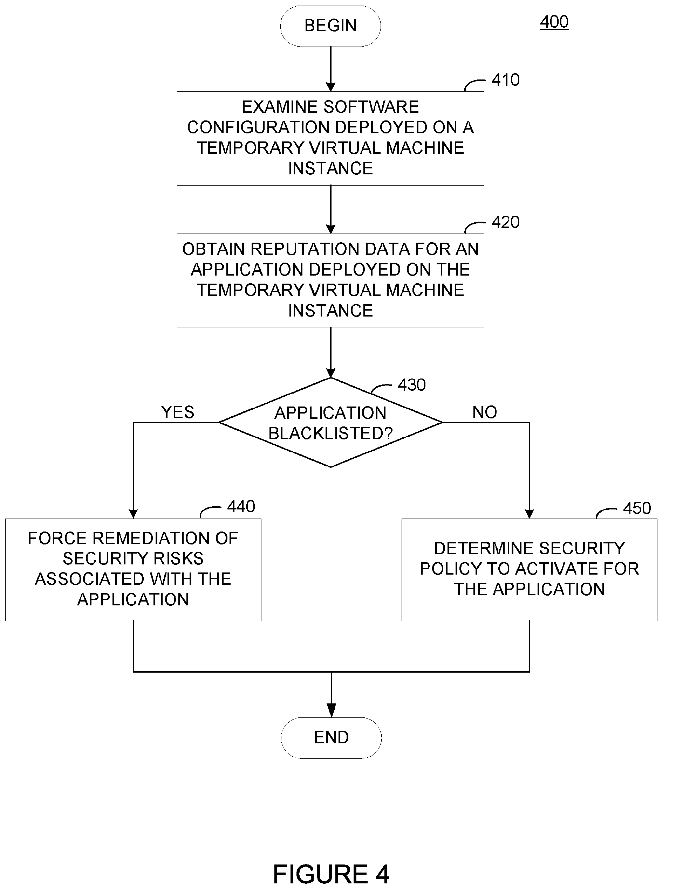

Figure 4 illustrates example operations 400 for a security system to use reputation information about applications deployed on a temporary virtual machine instance to generate a security policy for the temporary virtual machine instance, according to an embodiment. As illustrated, operations 400 begin at step 410, where the security system examines the software configuration deployed on a temporary virtual machine instance. The security system can examine the software configuration deployed on a temporary virtual machine instance to obtain data about each application, such as an application name and/or fingerprint (*e.g.,* MD5 hash of the application executable) that the security system can use to query a reputation service for reputation data about an application.

At step 420, the security system obtains reputation data for an application deployed on the temporary virtual machine instance. The security system may obtain reputation data by transmitting a request, along with information identifying an application for which reputation data is requested, to a reputation service. In response, the security system receives data from the reputation service indicating that the application is trusted (*e.g.*, on a whitelist of applications allowed to execute on a virtual machine instance), untrusted (*e.g.,* on a blacklist of applications blocked from executing on a virtual machine instance), or unknown (*e.g.,* on a greylist).

At step 430, the security system determines, based on the received reputation data, whether the application is blacklisted. If so, at step 440, the security system forces remediation of security risks associated with the application. For example, the security system can instruct a security agent on a temporary virtual machine instance to remove a blacklisted application and associated components, block inbound and/or outbound traffic associated with a particular network location, and so on. In some cases, the security system may additionally identify peer virtual machine instances that may also be compromised by an untrusted application and force remediation of potential security risks on the peer virtual machine instances.

If the security system determines that the application is not blacklisted (*i.e.,* is included in a whitelist of trusted applications or greylist of unknown applications), at step 450, the security system determines a security policy to activate for the application. These security policies may include, for example, exposing certain ports to network traffic from external network locations, allowing applications to communicate with known network locations (*e.g.,* software update services associated with a particular application), and so on.

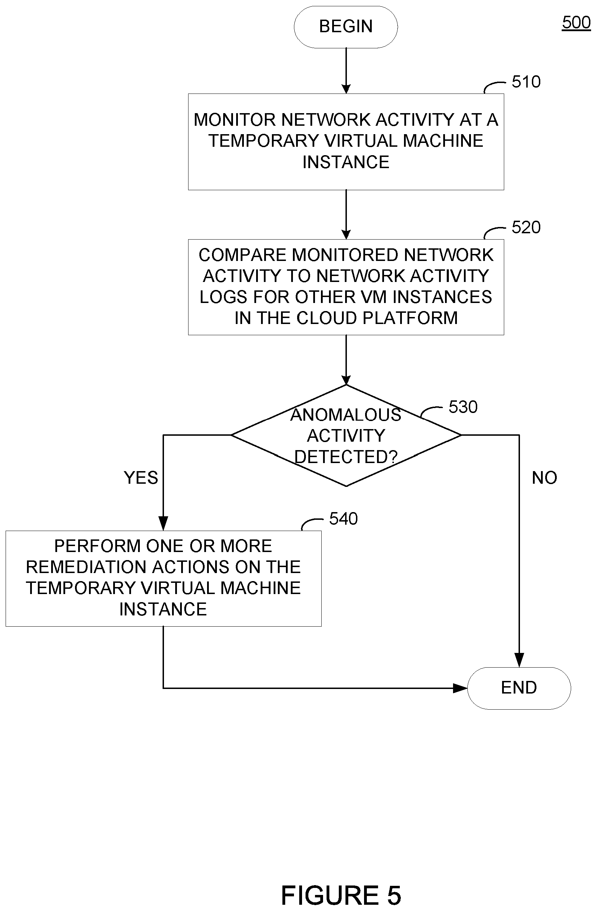

Figure 5 illustrates example operations 500 that may be performed by a security system to remediate security risks at a temporary virtual machine instance from anomalous network activity, according to an embodiment. As illustrated, operations 500 begin at step 510, where a security system monitors network activity at a temporary virtual machine instance. In some cases, a network monitoring component can monitor network activity at a temporary virtual machine instance by periodically requesting network activity logs from the temporary virtual machine instance.

At step 520, the security system compares the monitored network activity to network activity logs for other virtual machine instances in the cloud platform. At step 530, the security system determines if anomalous activity is detected at the temporary virtual machine instance. In some cases, the security system can identify anomalous activity at a temporary virtual machine instance based on deviations in network activity from activity detected at peer virtual machine instances.

If the security system does not detect anomalous activity at step 530, operations 500 may end. Otherwise, if the security system detects anomalous activity, at step 540, the security system performs one or more remediation actions on the temporary virtual machine instance. In some cases, the security system can quarantine the temporary virtual machine instance, which may prevent the temporary virtual machine instance from communicating with (and propagating malicious payloads to) other virtual machines in the cloud platform. In some cases, the security system can terminate the temporary virtual machine instance and spawn a replacement instance. By terminating the temporary virtual machine instance, a security system can break any network connections to malicious sources that are connected to the temporary virtual machine instance.

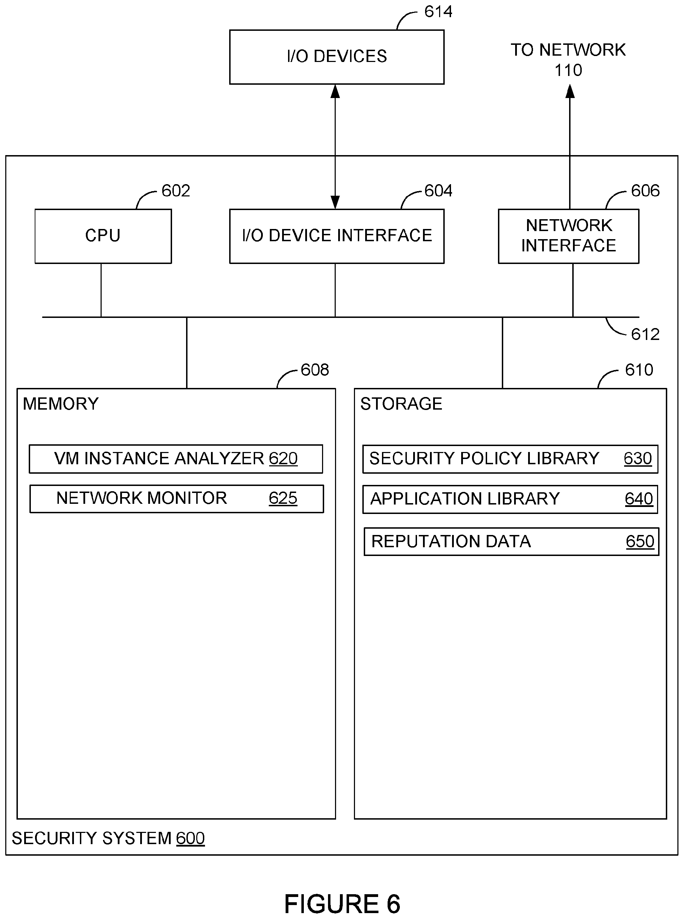

Figure 6 illustrates an example security system 600 that monitors for the creation of temporary virtual machine instances in a cloud platform and determines a security policy to be applied to temporary virtual machine instances as the instances are created, according to an embodiment. As shown, the endpoint system 600 includes, without limitation, a central processing unit (CPU) 602, one or more I/O device interfaces 604 which may allow for the connection of various I/O devices 614 (*e.g.,* keyboards, displays, mouse devices, pen input, etc.) to the endpoint system 600, network interface 606, a memory 608, storage 610, and an interconnect 612.

CPU 602 may retrieve and execute programming instructions stored in the memory 608. Similarly, the CPU 602 may retrieve and store application data residing in the memory 608. The interconnect 612 transmits programming instructions and application data, among the CPU 602, I/O device interface 604, network interface 606, memory 608, and storage 610. CPU 602 is included to be representative of a single CPU, multiple CPUs, a single CPU having multiple processing cores, and the like. Additionally, the memory 606 is included to be representative of a random access memory. Furthermore, the storage 610 may be a disk drive. Although shown as a single unit, the storage 610 may be a combination of fixed and/or removable storage devices, such as fixed disc drives, removable memory cards or optical storage, network attached storage (NAS), or a storage area-network (SAN).

As shown, memory 608 includes a VM instance analyzer 620 and a network monitor 625. VM instance analyzer 620 generally provides an interface between security system 600 and a cloud platform to allow VM instance analyzer to monitor for the creation and allocation of temporary virtual machine instances in a cloud platform. When a temporary virtual machine instance is created and allocated to a workload in the cloud platform, VM instance analyzer can request information about the characteristics of the temporary virtual machine instance and the applications deployed on the temporary virtual machine instance from the cloud platform (*e.g.,* using one or more APIs provided by the cloud platform).

VM instance analyzer 620 is generally configured to examine a repository of previously-applied security policies (*e.g.,* security policy library 630) for a security policy associated with a virtual machine instance with the same or similar characteristics and set of deployed applications. If VM instance analyzer 620 has generated a security policy for a virtual machine instance with the same or similar characteristics and set of deployed applications, VM instance analyzer 620 can apply the same security policy to the newly created temporary virtual machine instance.

When VM instance analyzer 620 encounters a new virtual machine configuration and set of deployed applications, VM instance analyzer can use the virtual machine configuration to generate a base security policy. The base security policy may be generated from whether the temporary virtual machine instance was allocated from a group of public virtual machine instances or allocated to a particular private network of virtual machines. VM instance analyzer 620 can subsequently use information about the applications deployed on a virtual machine (obtained from an application database, such as application library 640) to modify the security policy to allow the virtual machine to provide the services enabled by the deployed applications. VM instance analyzer 620 may additionally request information from reputation data 650 to determine if remediation procedures should be initiated on a virtual machine instance.

Network monitor 625 is generally configured to obtain network traffic information for virtual machine instances on a cloud platform to identify anomalies in network traffic directed to one or more virtual machine instances on the cloud platform. If network monitor 625 detects anomalies in network traffic (*e.g.,* by detecting a large amount of traffic directed to or generated by a specific, unknown application on a virtual machine instance), network monitor 625 may initiate remediation procedures on a virtual machine instance. For example, network monitor 625 can quarantine a virtual machine instance, which may prevent the virtual machine instance from interacting with other virtual machine instances on the cloud platform until security risks are removed from the quarantined virtual machine instance. In another example, network monitor 625 can terminate a temporary virtual machine instance and spawn a replacement instance.

As shown, storage 610 includes security policy library 630, application library 640, and reputation data 650. Security policy library 630 generally includes information about one or more security policies that have been previously generated by security system 600 for virtual machine instances on a cloud platform. As discussed above, security system 600 (specifically, VM instance analyzer 620) can use the security policies stored in security policy library 630 to generate a security policy for a newly created temporary virtual machine instance that shares characteristics and deployed applications with an existing virtual machine instance.

Application library 640 generally includes information about the functionality of applications that may be deployed on a temporary virtual machine instance and a security policy to be applied for an application. Security system 600 can use the information stored in application library 640 to modify a security policy and allow applications deployed to a temporary virtual machine to function as intended. Reputation data 650 generally associates applications with a trusted, untrusted, or unknown reputation status. The reputation status of an application may be used to determine whether to initiate remediation procedures on a newly allocated temporary virtual machine instance. As discussed above, if an untrusted application is deployed on a temporary virtual machine instance, security system 600 can initiate remediation procedures to remove the untrusted application, block traffic to one or more network locations associated with the untrusted application, and so on.

## Claims

1. A method for protecting temporary virtual machine instances from security risks, comprising:
monitoring a cloud platform (120) for the assignment of a temporary virtual machine instance (130) to a workload;
obtaining information about a configuration of the temporary virtual machine instance (130) and applications deployed on the temporary virtual machine instance (130); and
based on the configuration of the temporary virtual machine instance (130) and applications deployed on the temporary virtual machine instance (130), generating a security policy to apply to the temporary virtual machine instance (130);
**characterized in that**:
wherein generating a security policy to be applied to the temporary virtual machine instance (130) comprises one of the following:
upon determining that the temporary virtual machine instance (130) is allocated to a group of public virtual machine instances, blocking peer virtual machine instances from communicating with the temporary virtual machine instance (130); or
upon determining that the temporary virtual machine instance (130) is allocated to a private group of virtual machine instances, blocking virtual machine instances outside of the private group from communicating with the temporary virtual machine instance (130);
the method further comprising:
monitoring network activity on the temporary virtual machine instance (130);
comparing the monitored network activity to network activity from one or more peer virtual machine instances; and
detecting, based on the comparison, one or more network traffic anomalies indicative of a security risk to the cloud platform (120);
in particular further comprising one of the following:
upon detecting one or more traffic anomalies indicative of a security risk to the cloud platform (120), quarantining the temporary virtual machine instance (130); or
upon detecting one or more traffic anomalies indicative of a security risk to the cloud platform (120), terminating the temporary virtual machine instance (130) and spawning a replacement virtual machine instance.

2. The method of claim 1, wherein generating a security policy to be applied to the temporary virtual machine instance (130) comprises:
querying an application library (164, 640) for information about the applications deployed on the temporary virtual machine instance (130); and
based on the information about the applications deployed on the temporary virtual machine instance (130), opening one or more network ports on the temporary virtual machine instance (130).

3. The method of claim 1, further comprising:
requesting, from a reputation service, reputation data (166, 650) about the applications deployed on the temporary virtual machine instance (130); and
upon determining that at least a first application presents a security risk based on the reputation data (166, 650), initiating one or more remediation procedures on the temporary virtual machine instance (130).

4. A computer-readable medium comprising instructions which, when executed on a processor, performs an operation for protecting temporary virtual machine instances from security risks, the operation comprising:
monitoring a cloud platform (120) for the assignment of a temporary virtual machine instance (130) to a workload;
obtaining information about a configuration of the temporary virtual machine instance (130) and applications deployed on the temporary virtual machine instance (130); and
based on the configuration of the temporary virtual machine instance (130) and applications deployed on the temporary virtual machine instance (130), generating a security policy to apply to the temporary virtual machine instance (130);
**characterized in that**:
wherein generating a security policy to be applied to the temporary virtual machine instance (130) comprises one of the following:
upon determining that the temporary virtual machine instance (130) is allocated to a group of public virtual machine instances, blocking peer virtual machine instances from communicating with the temporary virtual machine instance (130); or
upon determining that the temporary virtual machine instance (130) is allocated to a private group of virtual machine instances, blocking virtual machine instances outside of the private group from communicating with the temporary virtual machine instance (130);
wherein the operation further comprises:
monitoring network activity on the temporary virtual machine instance (130);
comparing the monitored network activity to network activity from one or more peer virtual machine instances; and
detecting, based on the comparison, one or more network traffic anomalies indicative of a security risk to the cloud platform (120);
in particular wherein the operation further comprise:
upon detecting one or more traffic anomalies indicative of a security risk to the cloud platform (120), quarantining the temporary virtual machine instance (130), or terminating the temporary virtual machine instance (130) and spawning a replacement virtual machine instance.

5. The computer-readable medium of claim 4, wherein generating a security policy to be applied to the temporary virtual machine instance (130) comprises:
querying an application library (164, 640) for information about the applications deployed on the temporary virtual machine instance (130); and
based on the information about the applications deployed on the temporary virtual machine instance (130), opening one or more network ports on the temporary virtual machine instance (130).

6. The computer-readable medium of claim 4, wherein the operation further comprises:
requesting, from a reputation service, reputation data (166, 650) about the applications deployed on the temporary virtual machine instance (130); and
upon determining that at least a first application presents a security risk based on the reputation data (166, 650), initiating one or more remediation procedures on the temporary virtual machine instance (130).

7. A system comprising:
a processor; and
a memory comprising instructions which, when executed on the processor, performs an operation for protecting temporary virtual machine instances from security risks, the operation comprising:
monitoring a cloud platform (120) for the assignment of a temporary virtual machine instance (130) to a workload;
obtaining information about a configuration of the temporary virtual machine instance (130) and applications deployed on the temporary virtual machine instance (130); and
based on the configuration of the temporary virtual machine instance (130) and applications deployed on the temporary virtual machine instance (130), generating a security policy to apply to the temporary virtual machine instance (130);
**characterized in that**:
wherein generating a security policy to be applied to the temporary virtual machine instance (130) comprises one of the following:
upon determining that the temporary virtual machine instance (130) is allocated to a group of public virtual machine instances, blocking peer virtual machine instances from communicating with the temporary virtual machine instance (130); or
upon determining that the temporary virtual machine instance (130) is allocated to a private group of virtual machine instances, blocking virtual machine instances outside of the private group from communicating with the temporary virtual machine instance (130):
wherein the operation further comprises:
monitoring network activity on the temporary virtual machine instance (130);
comparing the monitored network activity to network activity from one or more peer virtual machine instances; and
detecting, based on the comparison, one or more network traffic anomalies indicative of a security risk to the cloud platform (120);
in particular wherein the operation further comprise:
upon detecting one or more traffic anomalies indicative of a security risk to the cloud platform (120), quarantining the temporary virtual machine instance (130), or terminating the temporary virtual machine instance (130) and spawning a replacement virtual machine instance.

8. The system of claim 7, wherein generating a security policy to be applied to the temporary virtual machine instance (130) comprises:
querying an application library (164, 640) for information about the applications deployed on the temporary virtual machine instance (130); and
based on the information about the applications deployed on the temporary virtual machine instance (130), opening one or more network ports on the temporary virtual machine instance (130).

9. The system of claim 7, wherein the operation further comprises:
requesting, from a reputation service, reputation data (166, 650) about the applications deployed on the temporary virtual machine instance (130); and
upon determining that at least a first application presents a security risk based on the reputation data (166, 650), initiating one or more remediation procedures on the temporary virtual machine instance (130).

## Patentansprüche

1. Ein Verfahren zum Schützen temporärer Virtuelle-Maschine-Instanzen vor Sicherheitsrisiken, aufweisend:
Überwachen einer Cloud-Plattform (120) für die Zuordnung einer temporären Virtuelle-Maschine-Instanz (130) zu einer Arbeitslast;
Erhalten einer Information über eine Konfiguration der temporären Virtuelle-Maschine-Instanz (130) und Anwendungen, welche auf der temporären Virtuelle-Maschine-Instanz (130) genutzt werden; und
basierend auf der Konfiguration der temporären Virtuelle-Maschine-Instanz (130) und den Anwendungen, welche auf der temporären Virtuelle-Maschine-Instanz (130) genutzt werden, Erzeugen einer Sicherheitsrichtlinie zum Anwenden auf die temporäre Virtuelle-Maschine-Instanz (130);
**dadurch gekennzeichnet, dass**
wobei das Erzeugen einer Sicherheitsrichtlinie, welche auf die temporäre Virtuelle-Maschine-Instanz (130) anzuwenden ist, eines der folgenden aufweist:
Auf ein Bestimmen hin, dass die temporäre Virtuelle-Maschine-Instanz (130) zu einer Gruppe von öffentlichen Virtuelle-Maschine-Instanzen zugeordnet ist, Sperren, dass Peer-virtuelle-Maschine-Instanzen mit der temporären Virtuelle-Maschine-Instanz (130) kommunizieren; oder
auf ein Bestimmen hin, dass die temporäre Virtuelle-Maschine-Instanz (130) zu einer privaten Gruppe von Virtuelle-Maschine-Instanzen zugeordnet ist, Sperren, dass die Virtuelle-Maschine-Instanzen außerhalb der privaten Gruppe mit der temporären Virtuelle-Maschine-Instanz (130) kommunizieren;
wobei das Verfahren ferner aufweist:
Überwachen einer Netzwerkaktivität auf der temporären Virtuelle-Maschine-Instanz (130);
Vergleichen der überwachten Netzwerkaktivität mit einer Netzwerkaktivität einer oder mehrerer Peer-virtuelle-Maschine-Instanzen; und
Detektieren, basierend auf dem Vergleich, einer oder mehrerer Netzwerkverkehranomalien, welche indikativ für ein Sicherheitsrisiko für die Cloud-Plattform (120) sind;
insbesondere ferner eines der folgenden aufweisend:
auf das Detektieren einer oder mehrerer Verkehranomalien hin, welche für ein Sicherheitsrisiko für die Cloud-Plattform (120) indikativ sind, unter Quarantäne stellen der temporären Virtuelle-Maschine-Instanz (130); oder
auf das Detektieren einer oder mehrerer Verkehranomalien hin, welche indikativ für ein Sicherheitsrisiko für die Cloud-Plattform (120) sind, Beenden der temporären Virtuelle-Maschine-Instanz (130) und Erzeugen einer Ersatz-virtuelle-Maschine-Instanz.

2. Das Verfahren gemäß Anspruch 1, wobei das Erzeugen einer Sicherheitsrichtlinie, welche auf die temporäre Virtuelle-Maschine-Instanz (130) anzuwenden ist, aufweist:
Abfragen einer Anwendungsbibliothek (164, 640) nach einer Information über die Anwendungen, welche auf der temporären Virtuelle-Maschine-Instanz (130) genutzt werden; und
basierend auf der Information über die Anwendungen, welche auf der temporären Virtuelle-Maschine-Instanz (130) genutzt werden, Öffnen eines oder mehrerer Netzwerkanschlüsse auf der temporären Virtuelle-Maschine-Instanz (130).

3. Das Verfahren gemäß Anspruch 1, ferner aufweisend:
Anfordern, von einem Reputationsservice, von Reputationsdaten (166, 650) über die Anwendungen, welche auf der temporären Virtuelle-Maschine-Instanz (130) genutzt werden; und
auf das Bestimmen hin, dass mindestens eine erste Anwendung ein Sicherheitsrisiko darstellt, basierend auf den Reputationsdaten (166, 650), Initiieren einer oder mehrerer Abhilfeprozeduren auf der temporären Virtuelle-Maschine-Instanz (130).

4. Ein computerlesbares Medium aufweisend Anweisungen, welche, wenn sie auf einem Prozessor ausgeführt werden, einen Vorgang zum Schützen temporärer Virtuelle-Maschine-Instanzen vor Sicherheitsrisiken ausführt, wobei der Vorgang aufweist:
Überwachen einer Cloud-Plattform (120) für die Zuordnung einer temporären Virtuelle-Maschine-Instanz (130) zu einer Arbeitslast;
Erhalten einer Information über eine Konfiguration der temporären Virtuelle-Maschine-Instanz (130) und Anwendungen, welche auf der temporären Virtuelle-Maschine-Instanz (130) genutzt werden; und
basierend auf der Konfiguration der temporären Virtuelle-Maschine-Instanz (130) und den Anwendungen, welche auf der temporären Virtuelle-Maschine-Instanz (130) genutzt werden, Erzeugen einer Sicherheitsrichtlinie zum Anwenden auf die temporäre Virtuelle-Maschine-Instanz (130);
**dadurch gekennzeichnet, dass**:
wobei das Erzeugen einer Sicherheitsrichtlinie, welche auf die temporäre Virtuelle-Maschine-Instanz (130) anzuwenden ist, mindestens eines der folgenden aufweist:
auf ein Bestimmen hin, dass die temporäre Virtuelle-Maschine-Instanz (130) zu einer Gruppe von öffentlichen Virtuelle-Maschine-Instanzen zugeordnet ist, Sperren, dass Peer-virtuelle-Maschine-Instanzen mit der temporären Virtuelle-Maschine-Instanz (130) kommunizieren; oder
auf ein Bestimmen hin, dass die temporäre Virtuelle-Maschine-Instanz (130) zu einer privaten Gruppe von Virtuelle-Maschine-Instanzen zugeordnet ist, Sperren, dass die Virtuelle-Maschine-Instanzen außerhalb der privaten Gruppe mit der temporären Virtuelle-Maschine-Instanz (130) kommunizieren;
wobei der Vorgang ferner aufweist:
Überwachen einer Netzwerkaktivität auf der temporären Virtuelle-Maschine-Instanz (130);
Vergleichen der überwachten Netzwerkaktivität mit der Netzwerkaktivität einer oder mehrerer Peer-virtuelle-Maschine-Instanzen; und
Detektieren, basierend auf dem Vergleich, einer oder mehrerer Netzwerkverkehranomalien, welche indikativ für ein Sicherheitsrisiko für die Cloud-Plattform (120) sind;
insbesondere wobei der Vorgang ferner aufweist:
auf das Detektieren einer oder mehrerer Verkehranomalien hin, welche indikativ für ein Sicherheitsrisiko für die Cloud-Plattform (120) sind, unter Quarantäne stellen der temporären Virtuelle-Maschine-Instanz (130), oder Beenden der temporären Virtuelle-Maschine-Instanz (130) und Erzeugen einer Ersatz-virtuelle-Maschine-Instanz.

5. Das computerlesbare Medium gemäß Anspruch 4, wobei das Erzeugen einer Sicherheitsrichtlinie, welche auf die temporäre Virtuelle-Maschine-Instanz (130) anzuwenden ist, aufweist:
Abfragen einer Anwendungsbibliothek (164, 640) nach einer Information über die Anwendungen, welche auf der temporären Virtuelle-Maschine-Instanz (130) genutzt werden; und
basierend auf der Information über die Anwendungen, welche auf der temporären Virtuelle-Maschine-Instanz (130) genutzt werden, Öffnen eines oder mehrerer Netzwerkanschlüsse auf der temporären Virtuelle-Maschine-Instanz (130).

6. Das computerlesbare Medium gemäß Anspruch 4, wobei der Vorgang ferner aufweist:
Anfordern, von einem Reputationsservice, von Reputationsdaten (166, 650) über die Anwendungen, welche auf der temporären Virtuelle-Maschine-Instanz (130) genutzt werden; und
auf ein Bestimmen hin, dass mindestens eine erste Anwendung ein Sicherheitsrisiko darstellt, basierend auf den Reputationsdaten (166, 650), Initiieren einer oder mehrerer Abhilfeprozeduren auf der temporären Virtuelle-Maschine-Instanz (130).

7. Ein System aufweisend:
einen Prozessor; und
einen Speicher aufweisend Anweisungen, welche, wenn sie auf einem Prozessor ausgeführt werden, einen Vorgang zum Schützen temporärer Virtuelle-Maschine-Instanzen vor Sicherheitsrisiken ausführen, bei der Vorgang aufweist:
Überwachen einer Cloud-Plattform (120) für die Zuordnung einer temporären Virtuelle-Maschine-Instanz (130) zu einer Arbeitslast;
Erhalten einer Information über eine Konfiguration der temporären Virtuelle-Maschine-Instanz (130) und Anwendungen, welche auf der temporären Virtuelle-Maschine-Instanz (130) genutzt werden; und
basierend auf der Konfiguration der temporären Virtuelle-Maschine-Instanz (130) und den Anwendungen, welche auf der temporären Virtuelle-Maschine-Instanz (130) genutzt werden, Erzeugen einer Sicherheitsrichtlinie zum Anwenden auf die temporäre Virtuelle-Maschine-Instanz (130);
**dadurch gekennzeichnet, dass**:
wobei das Erzeugen einer Sicherheitsrichtlinie, welche auf die temporäre Virtuelle-Maschine-Instanz (130) anzuwenden ist, eines der folgenden aufweist:
auf das Bestimmen hin, dass die temporäre Virtuelle-Maschine-Instanz (130) zu einer Gruppe von öffentlichen Virtuelle-Maschine-Instanzen zugeordnet ist, Sperren, dass Peer-virtuelle-Maschine-Instanzen mit der temporären Virtuelle-Maschine-Instanz (130) kommunizieren; oder
auf das Bestimmen hin, dass die temporäre Virtuelle-Maschine-Instanz (130) zu einer privaten Gruppe von Virtuelle-Maschine-Instanzen zugeordnet ist, Sperren, dass Virtuelle-Maschine-Instanzen außerhalb der privaten Gruppe mit der temporären Virtuelle-Maschine-Instanz (130) kommunizieren;
wobei der Vorgang ferner aufweist:
Überwachen einer Netzwerkaktivität auf der temporären Virtuelle-Maschine-Instanz (130);
Vergleichen der überwachten Netzwerkaktivität mit einer Netzwerkaktivität einer oder mehrerer Peer-virtuelle-Maschine-Instanzen; und
Detektieren, basierend auf dem Vergleich, einer oder mehrerer Netzwerkverkehranomalien, welche indikativ für ein Sicherheitsrisiko für die Cloud-Plattform (120) sind;
insbesondere wobei der Vorgang ferner aufweist:
auf das Detektieren einer oder mehrerer Verkehranomalien hin, welche indikativ für ein Sicherheitsrisiko für die Cloud-Plattform (120) sind, unter Quarantäne stellen der temporären Virtuelle-Maschine-Instanz (130), oder Beenden der temporären Virtuelle-Maschine-Instanz (130) und Erzeugen einer Ersatz-virtuelle-Maschine-Instanz.

8. Das System gemäß Anspruch 7, wobei das Erzeugen einer Sicherheitsrichtlinie, welche auf die temporäre Virtuelle-Maschine-Instanz (130) anzuwenden ist, aufweist:
Abfragen einer Anwendungsbibliothek (164, 640) nach einer Information über die Anwendungen, welche auf der temporären Virtuelle-Maschine-Instanz (130) genutzt werden; und
basierend auf der Information über die Anwendungen, welche auf der temporären Virtuelle-Maschine-Instanz (130) genutzt werden, Öffnen eines oder mehrerer Netzwerkanschlüsse auf der temporären Virtuelle-Maschine-Instanz (130).

9. Das System gemäß Anspruch 7, wobei der Vorgang ferner aufweist:
Anfordern, von einem Reputationsservice, von Reputationsdaten (166, 650) über die Anwendungen, welche auf der temporären Virtuelle-Maschine-Instanz (130) genutzt werden; und
auf ein Bestimmen hin, dass mindestens eine erste Anwendung ein Sicherheitsrisiko darstellt, basierend auf den Reputationsdaten (166, 650), Initiieren einer oder mehrerer Abhilfeprozeduren auf der temporären Virtuelle-Maschine-Instanz (130).

## Revendications

1. Procédé de protection d'instances de machine virtuelle temporaires contre des risques pour la sécurité, comprenant les étapes suivantes consistant à :
surveiller une plateforme en nuage (120) pour l'attribution d'une instance de machine virtuelle temporaire (130) à une charge de travail ;
obtenir des informations sur une configuration de l'instance de machine virtuelle temporaire (130) et des applications déployées sur l'instance de machine virtuelle temporaire (130) ; et
sur la base de la configuration de l'instance de machine virtuelle temporaire (130) et des applications déployées sur l'instance de machine virtuelle temporaire (130), générer une politique de sécurité à appliquer à l'instance de machine virtuelle temporaire (130) ;
**caractérisé en ce que** :
dans lequel la génération d'une politique de sécurité à appliquer à l'instance de machine virtuelle temporaire (130) comprend l'une des étapes suivantes consistant à :
après avoir déterminé que l'instance de machine virtuelle temporaire (130) est attribuée à un groupe d'instances de machine virtuelle publiques, empêcher des instances de machine virtuelle homologues de communiquer avec l'instance de machine virtuelle temporaire (130) ; ou
après avoir déterminé que l'instance de machine virtuelle temporaire (130) est attribuée à un groupe privé d'instances de machine virtuelle, empêcher les instances de machine virtuelle en dehors du groupe privé de communiquer avec l'instance de machine virtuelle temporaire (130) ;
le procédé comprenant en outre les étapes consistant à :
surveiller une activité de réseau sur l'instance de machine virtuelle temporaire (130) ;
comparer l'activité de réseau surveillée à l'activité de réseau à partir d'une ou plusieurs instances de machine virtuelle homologues ; et
détecter, sur la base de la comparaison, une ou plusieurs anomalies de trafic de réseau indiquant un risque pour la sécurité de la plateforme en nuage (120) ;
en particulier comprenant en outre une des étapes suivantes consistant à :
après avoir détecté une ou plusieurs anomalies de trafic indiquant un risque pour la sécurité de la plateforme en nuage (120), mettre en quarantaine l'instance de machine virtuelle temporaire (130) ; ou
après avoir détecté une ou de plusieurs anomalies de trafic indiquant un risque pour la sécurité pour la plateforme en nuage (120), mettre fin à l'instance de machine virtuelle temporaire (130) et engendrer une instance de machine virtuelle de remplacement.

2. Procédé selon la revendication 1, dans lequel la génération d'une politique de sécurité à appliquer à l'instance de machine virtuelle temporaire (130) comprend les étapes consistant à :
interroger une bibliothèque d'applications (164, 640) pour des informations sur les applications déployées sur l'instance de machine virtuelle temporaire (130) ; et
sur la base des informations sur les applications déployées sur l'instance de machine virtuelle temporaire (130), ouvrir un ou plusieurs ports de réseau sur l'instance de machine virtuelle temporaire (130).

3. Procédé selon la revendication 1, comprenant en outre les étapes consistant à :
demander, à partir d'un service de réputation, des données de réputation (166, 650) sur les applications déployées sur l'instance de machine virtuelle temporaire (130) ; et
après avoir déterminé qu'au moins une première application présente un risque pour la sécurité sur la base des données de réputation (166, 650), lancer une ou plusieurs procédures de remédiation sur l'instance de machine virtuelle temporaire (130).

4. Support lisible par ordinateur comprenant des instructions qui, lorsqu'elles sont exécutées sur un processeur, effectuent une opération de protection d'instances de machine virtuelle temporaires contre des risques pour la sécurité, l'opération comprenant les étapes consistant à :
surveiller une plateforme en nuage (120) pour l'attribution d'une instance de machine virtuelle temporaire (130) à une charge de travail ;
obtenir des informations sur une configuration de l'instance de machine virtuelle temporaire (130) et des applications déployées sur l'instance de machine virtuelle temporaire (130) ; et
sur la base de la configuration de l'instance de machine virtuelle temporaire (130) et des applications déployées sur l'instance de machine virtuelle temporaire (130), générer une politique de sécurité à appliquer à l'instance de machine virtuelle temporaire (130) ;
**caractérisé en ce que** :
dans lequel la génération d'une politique de sécurité à appliquer à l'instance de machine virtuelle temporaire (130) comprend l'une des étapes suivantes consistant à :
après avoir déterminé que l'instance de machine virtuelle temporaire (130) est attribuée à un groupe d'instances de machine virtuelle publiques, empêcher les instances de machine virtuelle homologues de communiquer avec l'instance de machine virtuelle temporaire (130) ;
après avoir déterminé que l'instance de machine virtuelle temporaire (130) est attribuée à un groupe privé d'instances de machine virtuelle, empêcher les instances de machine virtuelle en dehors du groupe privé de communiquer avec l'instance de machine virtuelle temporaire (130) ;
dans lequel l'opération comprend en outre les étapes consistant à :
surveiller l'activité du réseau sur l'instance de machine virtuelle temporaire (130) ;
comparer l'activité de réseau surveillée à l'activité de réseau à partir d'une ou plusieurs instances de machine virtuelle homologues ; et
détecter, sur la base de la comparaison, une ou plusieurs anomalies de trafic de réseau indiquant un risque pour la sécurité de la plateforme en nuage (120) ;
en particulier dans lequel l'opération comprend en outre l'étape consistant à :
après avoir détecté une ou de plusieurs anomalies de trafic indiquant un risque pour la sécurité pour la plateforme en nuage (120), mettre en quarantaine l'instance de machine virtuelle temporaire (130) ; ou mettre fin à l'instance de machine virtuelle temporaire (130) et engendrer une instance de machine virtuelle de remplacement.

5. Support lisible par ordinateur selon la revendication 4, dans lequel la génération d'une politique de sécurité à appliquer à l'instance de machine virtuelle temporaire (130) comprend l'étape suivante :
interroger une bibliothèque d'applications (164, 640) pour obtenir des informations sur les applications déployées sur l'instance de machine virtuelle temporaire (130) ; et
sur la base des informations sur les applications déployées sur l'instance de machine virtuelle temporaire (130), ouvrir un ou plusieurs ports de réseau sur l'instance de machine virtuelle temporaire (130).

6. Support lisible par ordinateur selon la revendication 4, dans lequel l'opération comprend en outre les étapes consistant à :
demander, à partir d'un service de réputation, des données de réputation (166, 650) sur les applications déployées sur l'instance de machine virtuelle temporaire (130) ; et
après avoir déterminé qu'au moins une première application présente un risque pour la sécurité sur la base des données de réputation (166, 650), lancer une ou plusieurs procédures de remédiation sur l'instance de machine virtuelle temporaire (130).

7. Système comprenant :
un processeur ; et
une mémoire comprenant des instructions qui, lorsqu'elles sont exécutées sur le processeur, effectuent une opération de protection d'instances de machine virtuelle temporaire contre des risques pour la sécurité, l'opération comprenant les étapes suivantes :
surveiller une plateforme en nuage (120) pour l'attribution d'une instance de machine virtuelle temporaire (130) à une charge de travail ;
obtenir des informations sur une configuration de l'instance de machine virtuelle temporaire (130) et des applications déployées sur l'instance de machine virtuelle temporaire (130) ; et
sur la base de la configuration de l'instance de machine virtuelle temporaire (130) et des applications déployées sur l'instance de machine virtuelle temporaire (130), générer une politique de sécurité à appliquer à l'instance de machine virtuelle temporaire (130) ;
**caractérisé en ce que** :
dans lequel la génération d'une politique de sécurité à appliquer à l'instance de machine virtuelle temporaire (130) comprend l'un des éléments suivants :
après avoir déterminé que l'instance de machine virtuelle temporaire (130) est attribuée à un groupe d'instances de machine virtuelle publiques, empêcher les instances de machine virtuelle homologues de communiquer avec l'instance de machine virtuelle temporaire (130) ;
après avoir déterminé que l'instance de machine virtuelle temporaire (130) est attribuée à un groupe privé d'instances de machine virtuelle, empêcher les instances de machine virtuelle en dehors du groupe privé de communiquer avec l'instance de machine virtuelle temporaire (130) :
dans lequel l'opération comprend en outre les étapes consistant à :
surveiller l'activité du réseau sur l'instance de machine virtuelle temporaire (130) ;
comparer l'activité de réseau surveillée à l'activité de réseau à partir d'une ou plusieurs instances de machine virtuelle homologues ; et
détecter, sur la base de la comparaison, une ou plusieurs anomalies de trafic de réseau indiquant un risque pour la sécurité de la plateforme en nuage (120) ;
en particulier dans lequel l'opération comprend en outre :
après avoir détecté une ou de plusieurs anomalies de trafic indiquant un risque pour la sécurité pour la plateforme en nuage (120), mettre en quarantaine l'instance de machine virtuelle temporaire (130) ; ou mettre fin à l'instance de machine virtuelle temporaire (130) et engendrer une instance de machine virtuelle de remplacement.

8. Système selon la revendication 7, dans laquelle la génération d'une politique de sécurité à appliquer à l'instance de machine virtuelle temporaire (130) comprend les étapes consistant à :
interroger une bibliothèque d'applications (164, 640) pour obtenir des informations sur les applications déployées sur l'instance de machine virtuelle temporaire (130) ; et
sur la base des informations sur les applications déployées sur l'instance de machine virtuelle temporaire (130), ouvrir un ou plusieurs ports de réseau sur l'instance de machine virtuelle temporaire (130).

9. Système selon la revendication 7, dans lequel l'opération comprend en outre les étapes consistant à :
demander, à partir d'un service de réputation, des données de réputation (166, 650) sur les applications déployées sur l'instance de machine virtuelle temporaire (130) ; et
après avoir déterminé qu'au moins une première application présente un risque pour la sécurité sur la base des données de réputation (166, 650), lancer une ou plusieurs procédures de remédiation sur l'instance de machine virtuelle temporaire (130).
